# EUROPEAN PATENT APPLICATION

(11) **EP 2 624 582 A1**
(43) Date of publication of application: **07.08.2013**
(21) Application number: 12181462.8
(22) Date of filing: 23.08.2012
(51) Int. Cl.: H04N 21/431, H04N 21/482, G06F 21/10, G06F 21/62, H04L 29/06, H04N 21/8355, H04N 21/4367, H04N 21/4143

(54) **Source apparatus, control method of a source apparatus, sink apparatus, and control method of a sink apparatus**

(30) Priority: 31.01.2012 JP 2012019334
(71) Applicant: Kabushiki Kaisha Toshiba, Tokyo 105-8001 (JP)
(72) Inventor: Kito, Toshiyuki, Tokyo (JP)
(74) Representative: Henkel, Breuer & Partner

(57) **Abstract**

At least one embodiment provides a source apparatus including: a list display module configured to display a list of reproducible contents; a detecting module configured to obtain, upon receipt of an instruction to send contents list information to a sink apparatus, copyright protection compatibility information from the sink apparatus and detect a content that cannot be reproduced by the sink apparatus based on the obtained copyright protection compatibility information; and an icon information output module configured to output information of an icon that enables discrimination of the detected content that cannot be reproduced by the sink apparatus from an icon of a reproducible content.

## Description

### CROSS-REFERENCE TO RELAIED APPLICAUON(S)

This application claims priority from Japanese Patent Application No. 2012-019334, filed on January 31, 2012, the entire contents of which are incorporated herein by reference.

### FIELD

Embodiments described herein relate generally to a source apparatus, a control method of a source apparatus, a sink apparatus, and a control method of a sink apparatus.

### BACKGROUND

In recent years, with the spread of wireless LAN etc., it has become possible to transmit a video content from a video reproducing apparatus (source apparatus) such as a personal computer (PC) to a display apparatus (sink apparatus) such as a TV receiver.

On the other hand, since it is now possible to exchange a video content easily between apparatus, illegal copying of a video content may occur. And copyright protection techniques are employed to prevent such illegal copying etc.

In an environment in which a video content can be exchanged between apparatus, for example, a list of contents that can be reproduced on the source side (the contents list is displayed on the source side) can be transmitted to and displayed on the sink side.

However, in an environment in which one copyright protection technique is employed, there may occur an event that a contents list is displayed on the sink side (TV receiver) such that a content that cannot be reproduced on the sink side is included in the contents list so as not to be discriminated from the other, reproducible contents.

There is another copyright protection technique which prohibits display, in a contents list, of a content that cannot be reproduced on the sink side. However, it may be preferable that even if a content cannot be reproduced on the sink side, its presence be recognizable.

### BRIEF DESCRIPTION OF DRAWINGS

A general architecture that implements the various features of the present invention will now be described with reference to the drawings. The drawings and the associated descriptions are provided to illustrate embodiments and not to limit the scope of the present invention.
Fig. 1 shows how a list of video contents is transmitted from a source apparatus (PC)) to a sink apparatus (TV receiver) and displayed on the sink apparatus in a first embodiment.
Fig. 2 shows an appearance of the source apparatus.
Fig. 3 shows the internal configuration of the source apparatus.
Fig. 4 shows an appearance of the sink apparatus.
Fig. 5 shows the internal configuration of the sink apparatus.
Fig. 6 shows how the source apparatus inquires of the sink apparatus about copyright protection compatibility information of the sink apparatus.
Figs. 7A and 7B show example functional configurations of the source apparatus and the sink apparatus, respectively.
Fig. 8 shows a process executed by the source apparatus.
Fig. 9 shows a process executed by the sink apparatus.
Figs. 10A and 10B show example functional configurations of a source apparatus (PC) and a sink apparatus (TV receiver) according to a second embodiment, respectively.
Fig. 11 shows a process executed by the source apparatus.
Fig. 12 shows a process executed by the sink apparatus.
Fig. 13 shows another example picture of a contents list of the sink apparatus which is displayed by the sink apparatus according to each embodiment.

### DETAILED DESCRIPTION

One embodiment provides a source apparatus including: a list display module configured to display a list of reproducible contents; a detecting module configured to obtain, upon receipt of an instruction to send contents list information to a sink apparatus, copyright protection compatibility information from the sink apparatus and detect a content that cannot be reproduced by the sink apparatus based on the obtained copyright protection compatibility information; and an icon information output module configured to output information of an icon that enables discrimination of the detected content that cannot be reproduced by the sink apparatus from an icon of a reproducible content.

Embodiments will be hereinafter described with reference to the drawings.

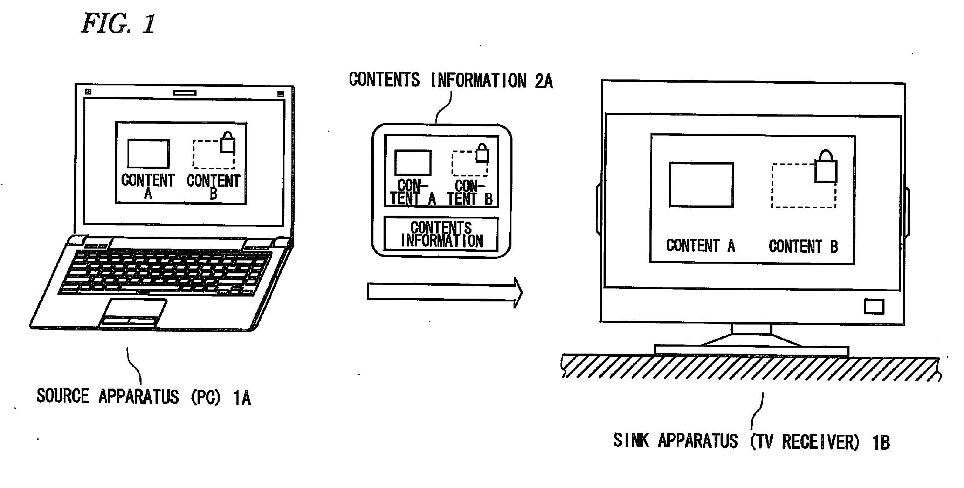

Fig. 1 shows how a list of video contents is transmitted from a source apparatus (personal computer (PC)) 1A to a sink apparatus (TV receiver) 1B and displayed on the sink apparatus 1B in a first embodiment. A list of video contents that can be displayed on the source apparatus 1A is displayed on the source apparatus 1A.

As shown in Fig. 1, content B is given a lock mark, which means that content B is copyright-protected (described later). On the other hand, content A is not given a lock mark, which means that content A is not copyright-protected.

In this embodiment, the source apparatus 1A and the sink apparatus 1B are connected to each other by a wireless LAN, for example, and a list of video contents (contents information 2A) is transmitted from the source apparatus 1A to the sink apparatus 1B.

The sink apparatus 1B receives the list of contents (contents information 2A) and displays, on its video display module, a contents list in which a content that can be reproduced by the sink apparatus 1B and a content that cannot be reproduced by the sink apparatus 1B are discriminated from each other.

In the embodiment, the source apparatus 1A is compatible with a copyright protection technique (e.g., HDCP) and the sink apparatus 1B is not compatible with the copyright protection technique (e.g., HDCP).

The copyright protection technique HDCP (high-bandwidth digital content protection system) will be described below. HDCP is a copyright protection technique for preventing illegal copying etc. in, for example, exchange of a video content between apparatus. For example, HDCP is a copyright protection technique for preventing illegal copying of a content by applying encryption to a path of transmission of a digital signal from a video reproducing apparatus such as a PC to a display apparatus such as a TV receiver. This copyright protection technique is used for encryption in digital interfaces such as DVI (digital visual interface) or HDMI (high-definition multimedia interface).

In DVDs, digital TV broadcast, etc., video data is protected by an encryption technique and hence a copy produced by tapping the video data cannot be reproduced. However, for example, when video data is reproduced by a video reproducing apparatus such as a PC and sent to a display apparatus such as a TV receiver, the video data is decrypted. In this state, a pirated copy may be produced by tapping video data from a transmission system, for example. If video data being transmitted as a digital signal is tapped, a complete digital copy can be produced. HDCP was standardized to protect such video data by applying encryption to its transmission path.

In HDCP, the content transmission side (source side) authenticates the content reception side (sink side) and the two sides share a key to be used for encryption of a content (public key encryption). Video data to be transmitted is encrypted using the key and hence the video data is prevented from being tapped or falsified during transmission.

A content that is protected by HDCP cannot be displayed by a sink apparatus unless both of a source apparatus and the sink apparatus are compatible with HDCP. For example, even if a false receiving apparatus is used to tap data, transmission is refused by an authentication procedure.

The embodiment makes it possible to inform a user of the sink apparatus 1B (through display) whether or not each content can be reproduced by the sink apparatus 1B while indicating presence of each content to the user on the sink apparatus 1B, according to copyright protection compatibility information of the sink apparatus 1B.

As shown in Fig. 1, a video contents list is displayed on the video display module of the sink apparatus 1B in such a manner as to be suitable for a user of the sink apparatus 1B. Icons of all contents that can be reproduced by the source apparatus 1A, that is, an icon of content B which is given a lock mark (which means that it is copyright-protected) and an icon of content A which is not given a lock mark, are displayed in this video contents list.

In the embodiment, since the sink apparatus 1B is not compatible with the copyright protection technique HDCP and hence cannot reproduce content B which is given a lock mark. To indicate that content B cannot be reproduced by the sink apparatus 1B, the icon of content B is displayed in a semitransparent manner so as to be discriminated from the icon of the reproducible content A.

That is, in the embodiment, the icon of content A which can be reproduced by the sink apparatus 1B is displayed in the sink apparatus 1B in the same manner (i.e., using a solid line) as in the source apparatus 1A to indicate that content A can be reproduced by the sink apparatus 1B. The icon of content B which cannot be reproduced by the sink apparatus 1B is displayed in such a manner (i.e., in a semitransparent manner) as to be discriminated from the icon of content A to indicate that content B cannot be reproduced by the sink apparatus 1B.

In . DLNA, HDMI, etc., an unreproducible content is not displayed in a contents list on the sink side. In this case, a user of the sink apparatus 1B cannot recognize presence of a content that cannot be reproduced by the sink apparatus 1B.

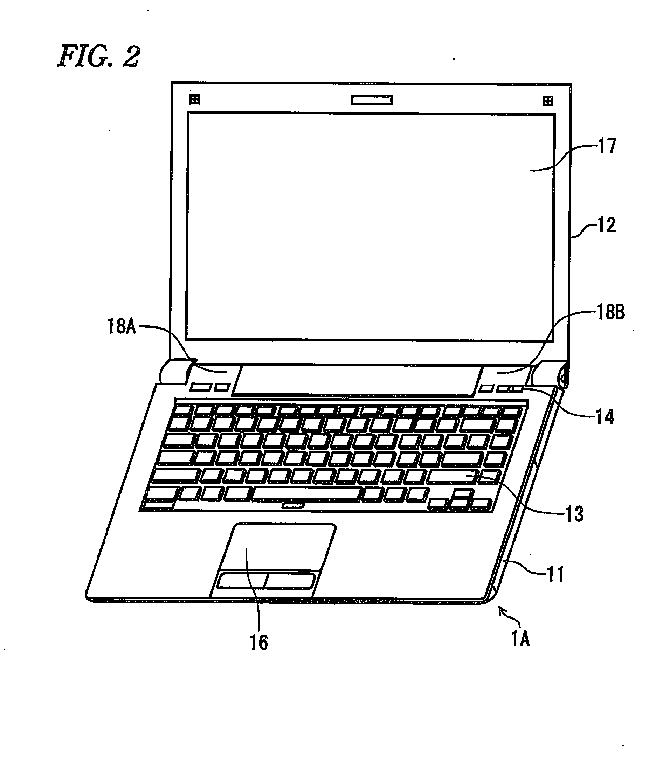

Fig. 2 shows an appearance of the source apparatus 1A according to the embodiment. In the embodiment, the source apparatus 1A is a notebook personal computer (notebook PC). However, the source apparatus is not limited to a notebook PC and may be a tablet PC, cell phone, a portable electronic apparatus, a TV receiver, or the like.

The source apparatus 1A has a main body 11 and a video display module 12. The video display module 12 incorporates an LCD (liquid crystal display) 17, for example. The video display module 12 is attached to the main body 11 so as to be rotatable between an open position where the video display module 12 exposes the top surface of the main body 11 and a closed position where the video display module 12 covers the top surface of the main body 11.

The main body 11 has a thin, box-shaped cabinet, and a keyboard 13, a power button 14 for powering on and off the source apparatus 1A, a touch pad 16, speakers 18A and 18B, etc. are arranged on the top surface of the main body 11.

The right side surface, for example, of the main body 11 is provided with a USB (universal serial bus) connector (not shown) for connection of a USB cable or USB device of the USB 2.0 standard.

The back surface of the main body 11 is provided with an external display connection terminal (not shown) which complies with the HDMI standard, for example. The external display connection terminal is used for outputting a digital video signal to an external display

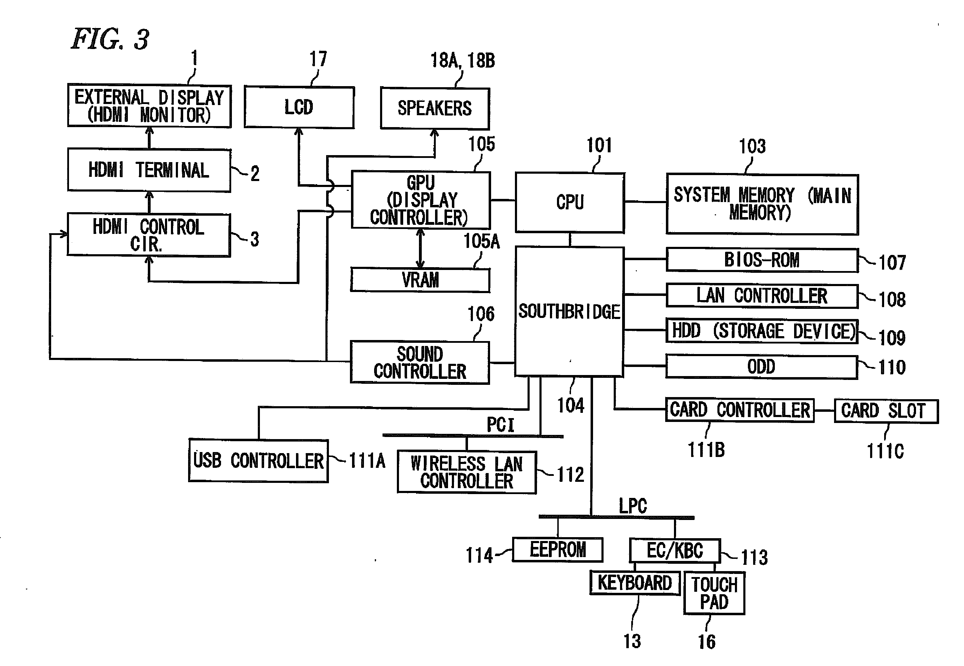

Fig. 3 shows the internal configuration of the source apparatus 1A according to the embodiment. As shown in Fig. 3, the source apparatus 1A is equipped with a CPU (central processing unit) 101, a system memory (main memory) 103, a southbridge 104, a GPU (graphics processing unit) 105, a VRAM (video random access memory) 105A, a sound controller 106, a BIOS-ROM (basic input/output system-read only memory) 107, a LAN (local area network) controller 108, a hard disk drive (HDD; storage device) 109, an optical disc drive (ODD) 110, a USB controller 111A, a card controller 111B, a card slot 111C, a wireless LAN controller 112, an embedded controller/keyboard controller (EC/KBC) 113, an EEPROM (electrically erasable programmable ROM) 114, etc.

The CPU (SOC) 101 is a processor for controlling the operations of the individual components of the source apparatus 1A. The CPU 101 runs a BIOS which is stored in the BIOS-ROM 107. The BIOS is programs for hardware control. The CPU 101 incorporates a memory controller for access-controlling the system memory 103. The CPU 101 also has a function of communicating with the GPU 105 via, for example, a serial bus of the PCI Express standard.

The GPU 105 is a display controller for controlling the LCD 17 which is used as a display monitor of the source apparatus 1A. A display signal generated by the GPU 105 is supplied to the LCD 17. The GPU 105 can also send a digital video signal to an external display 1 via an HDMI control circuit 3 and an HDMI terminal 2. The HDMI terminal 2 is the above-mentioned external display connection terminal. The HDMI terminal 2 makes it possible to send a non-compressed digital video signal and audio signal to the external display 1 such as a TV receiver through a single cable. The HDMI control circuit 3 is an interface for sending a digital video signal to the external display 1 (called an HDMI monitor) via the HDMI terminal 2.

The southbridge 104 controls individual devices on a PCI (peripheral component interconnect) bus and an LPC (low pin count) bus. The southbridge 104 incorporates an IDE Integrated drive electronics) controller for controlling the HDD 109 and the ODD 110. The southbridge 104 also has a function of communicating with the sound controller 106.

The sound controller 106, which is a sound source device, outputs reproduction subject audio data to the speakers 18A and 18B or the HDMI control circuit 3. The LAN controller 108 is a wired communication device for performing a wired communication of the IEEE 802.3 standard, for example. On the other hand, the wireless LAN controller 112 is a wireless communication device for performing a wireless communication of the IEEE 802.11g standard, for example. The USB controller 111A communicates with an external apparatus that complies with the USB 2.0 standard, for example.

For example, the USB controller 111A is used for receiving an image data file that is stored in a digital camera. The card controller 111B writes and reads data to and from a memory card such as an SD card that is inserted in the card slot 111C which is formed in the main body 11.

The EC/KBC 113 is a one-chip microcomputer in which an embedded controller for power management and a keyboard controller for controlling the keyboard 13 and the touch pad 16 are integrated together. The EC/KBC 113 has a function of powering on and off the source apparatus 1A in response to a user manipulation of the power button 14.

In the embodiment, for example, a display control is performed when the CPU 101 causes execution of programs stored in the system memory 103, the HDD 109, or the like.

An OS (operating system), which is stored in the HDD 109, for example, is software which provides common basic functions (e.g., input/output functions such as keyboard input and screen output and disc and memory management) to be used by many kinds of application software and which manages the entire computer system.

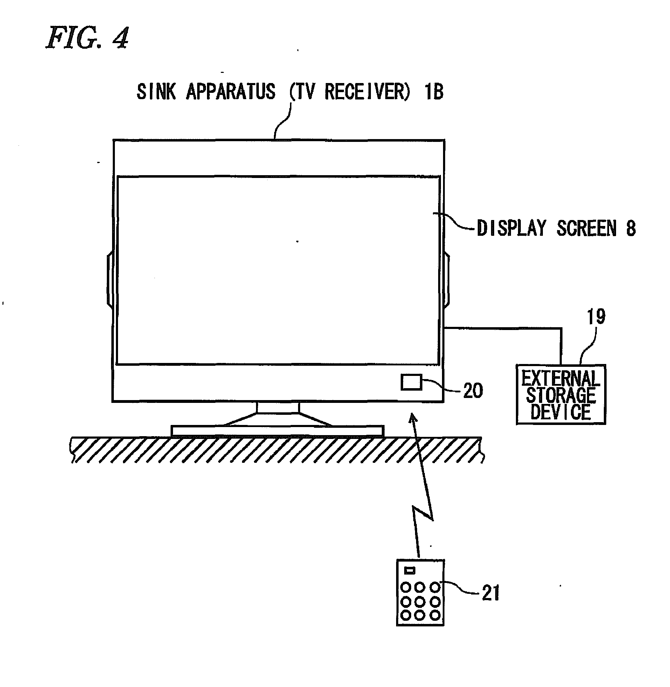

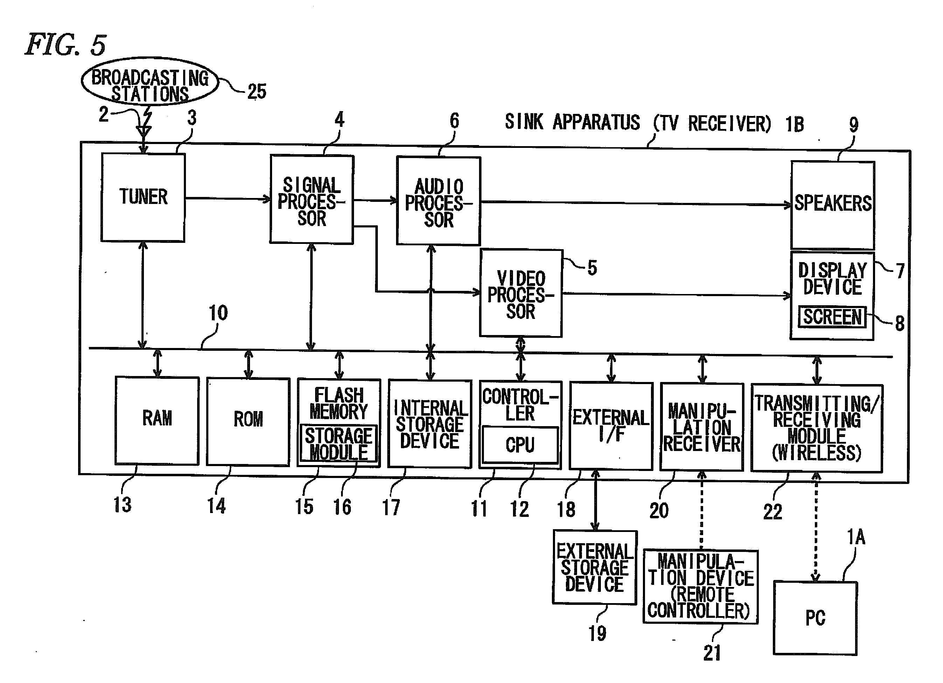

Fig. 4 shows an appearance of the sink apparatus 1B according to the embodiment. For example, when a user manipulates a remote controller 21, a remote control signal is transmitted to the sink apparatus 1B and received by a manipulation receiver 20 of the sink apparatus 1B. Operating according to the instruction of the received remote control signal, the sink apparatus 1B displays prescribed video on a display screen 8 of a display device 7 (see Fig. 5) such as an LCD (liquid crystal display).

As described above, the sink apparatus 1B according to the embodiment receives information of a list of video contents that is transmitted from the source apparatus 1A. The sink apparatus 1B is provided with an external storage device (e.g., HDD) 19 which is connected via a USB terminal, for example.

Fig. 5 shows the internal configuration of the sink apparatus 1B according to the embodiment. A controller 11 is equipped with a CPU 12 which controls the entire sink apparatus 1B. For example, a RAM 13, a ROM 14, and a flash memory 15 are used for processing performed by the controller 11. The flash memory 15 can store apparatus information that is set in this system or preset user information.

For example, broadcasting stations 25 broadcast video contents in the form of digital broadcasts. A tuner 3 receives the digital broadcasts and tunes in to one of them, and supplies a digital signal of the selected video content to a signal processor 4. The signal processor 4 performs signal processing on the received digital signal of the video content and supplies resulting signals to an audio processor 6 and a video processor 5.

The audio processor 6 performs audio processing on the received signal and supplies resulting signals to speakers 9. The speakers 9 output a sound on the basis of the received signals.

The video processor 5 performs video processing on the received signal and supplies resulting signal to the display device 7. The display device 7, which is an LCD, for example, displays video on its display screen 8.

In the embodiment, the sink apparatus 1B is equipped with an internal storage device 17. Like the above-mentioned external storage device 19, the internal storage device 17 can record all of received broadcast programs and thereby enables a time-shift playback. The sink apparatus 1B is equipped with the external storage device 19 which is USB or LAN-connected to the sink apparatus 1B. A received video content can also be recorded in the external storage device 19.

As described above, a user manipulation on the sink apparatus 1B is performed by a manipulation device such as the remote controller 21.

The above-described operations are controlled by the controller 11.

The sink apparatus 1B is connected to the source apparatus 1A through a transmitting/receiving module 22 of wireless LAN.

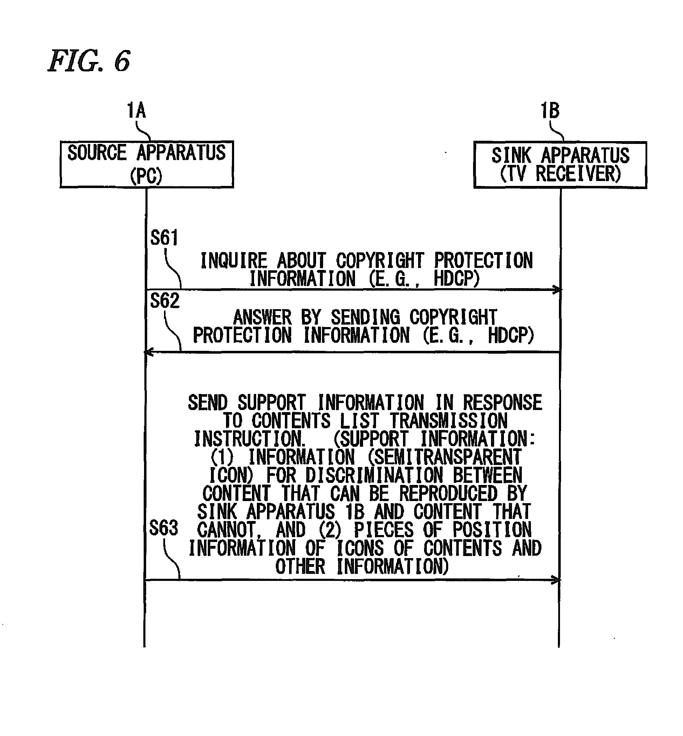

Fig. 6 shows how the source apparatus 1A inquires of the sink apparatus 1B about copyright protection compatibility information of the sink apparatus 1B in the embodiment. In the embodiment, as shown in Fig. 6, at step S61 the source apparatus 1A inquires of the sink apparatus 1B about copyright protection compatibility information (e.g., HDCP) of the sink apparatus 1B by communicating with the sink apparatus 1B.

When receiving the inquiry, at step S62 the sink apparatus 1B answers by sending copyright protection compatibility information (e.g., HDCP) of the sink apparatus 1B. The source apparatus 1A receives the copyright protection compatibility information (e.g., HDCP) of the sink apparatus 1B and stores it in the EEPROM 114, for example.

Furthermore, when instructed by a user to send a contents list, at step S63 the source apparatus 1A sends support information, for example, to the sink apparatus 1B.

For example, the support information is (1) information (e.g., a semitransparent icon) for discrimination between a content that can be reproduced by the sink apparatus 1B and a content that cannot, (2) pieces of position information of icons of contents and other information. The support information also includes picture information of a contents list that is displayed on the source apparatus 1A.

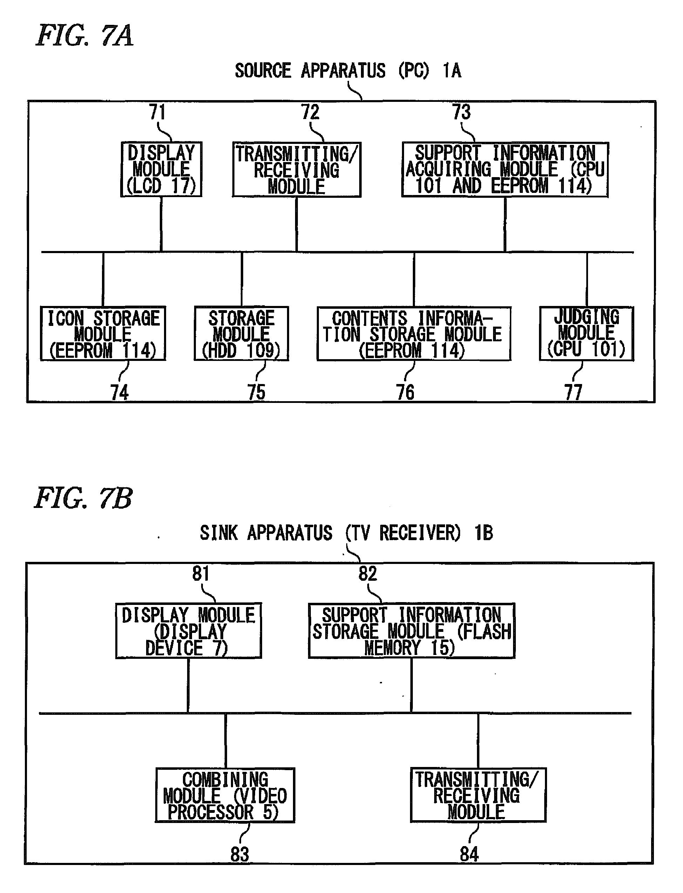

Figs. 7A and 7B show example functional configurations of the source apparatus 1A and the sink apparatus 1B according to the embodiment, respectively.

For example, as shown in Fig. 7A, the source apparatus 1A is equipped with a display module 71 (the above-described LCD 17), a transmitting/receiving module 72, a support information acquiring module 73 (CPU 101 and EEPROM 114) for acquiring support information, an icon storage module 74 (EEPROM 114) for storing a semitransparent icon, a storage module 75 (HDD 109) for storing video contents, a contents information storage module 76 (EEPROM 114) for storing contents information, and a judging module 77 (CPU 101).

As shown in Fig. 7B, the sink apparatus 1B is equipped with a display module 81 (display device 7), a support information storage module 82 (flash memory 15), a combining module 83 (video processor 5), and a transmitting/receiving module 84.

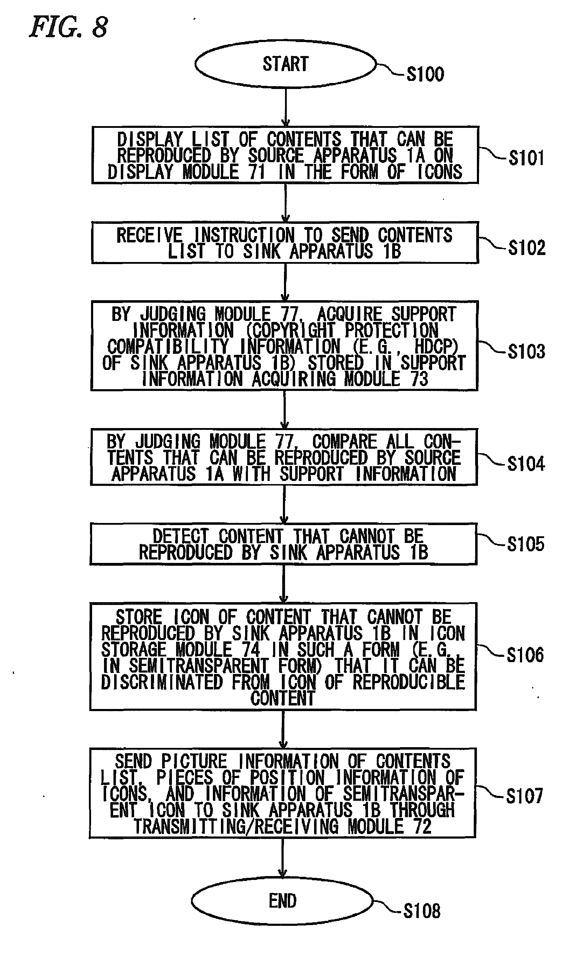

Fig. 8 shows a process executed by the source apparatus 1A according to the embodiment. The process starts at step S 100.

At step S101, as shown in Fig. 1, a list of contents that can be reproduced by the source apparatus 1A are displayed in the form of icons on the display module 71 of the source apparatus 1A.

At step S102, the source apparatus 1A receives an instruction to send the contents list to the sink apparatus 1B.

At step S103, the judging module 77 acquires support information (copyright protection compatibility information (e.g., HDCP) of the sink apparatus 1B) which is stored in the support information acquiring module 73.

At step S104, the judging module 77 compares all the contents that can be reproduced by the source apparatus 1A with the acquired support information.

At step S105, a content(s) that cannot be reproduced by the sink apparatus 1B is detected.

At step S106, an icon of the content cannot be reproduced by the sink apparatus 1B is stored in the icon storage module 74 in such a form (e.g., in a semitransparent form) as to be discriminated from an icon(s) of a reproducible content(s).

At step S107, picture information of the contents list, pieces of position information of the respective icons, and information of the semitransparent icon which are stored in the support information acquiring module 73 are sent to the sink apparatus 1B through the transmitting/receiving module 72. The process is finished at step S108.

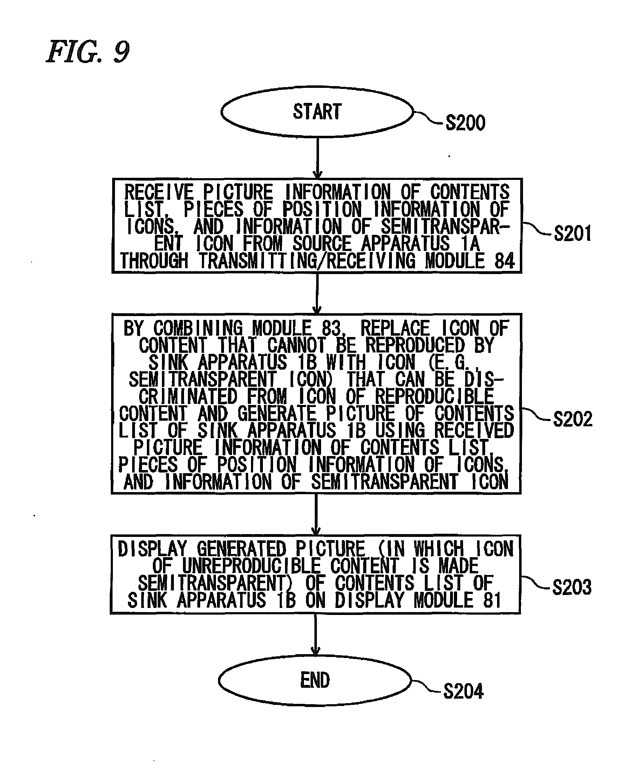

Fig. 9 shows a process executed by the sink apparatus 1B according to the embodiment. The process starts at step S200.

At step S201, picture information of a contents list, pieces of position information of respective icons, and information of a semitransparent icon(s) that are transmitted from the source apparatus 1A are received by the transmitting/receiving module 84.

At step S202, the combining module 83 replaces the icon of a content that cannot be reproduced by the sink apparatus 1B with an icon (e.g., semitransparent icon) that can be discriminated from an icon(s) of a reproducible content(s), pieces of position information of the icons, and information of the semitransparent icon and generates a picture of a contents list of the sink apparatus 1B using the received picture information of the contents list.

At step S203, the generated picture (the icon of the unreproducible content is semitransparent) of the contents list of the sink apparatus 1B is displayed on the display module 81. The process is finished at step S204.

With the above configuration, for example, as shown in Fig. 1, the content (content A) that can be reproduced by the sink apparatus 1B is displayed on the display screen 8 of the sink apparatus 1B using a solid line to indicate that it can be reproduced by the sink apparatus 1B. On the other hand, the content (content B) that cannot be reproduced by the sink apparatus 1B is displayed using an icon (e.g., semitransparent icon) that enables discrimination of that content from the reproducible content, to indicate that it cannot be reproduced by the sink apparatus 1B. This makes it possible to inform a user on the sink side whether or not each content can be reproduced on the sink side while indicating presence of each content to the user.

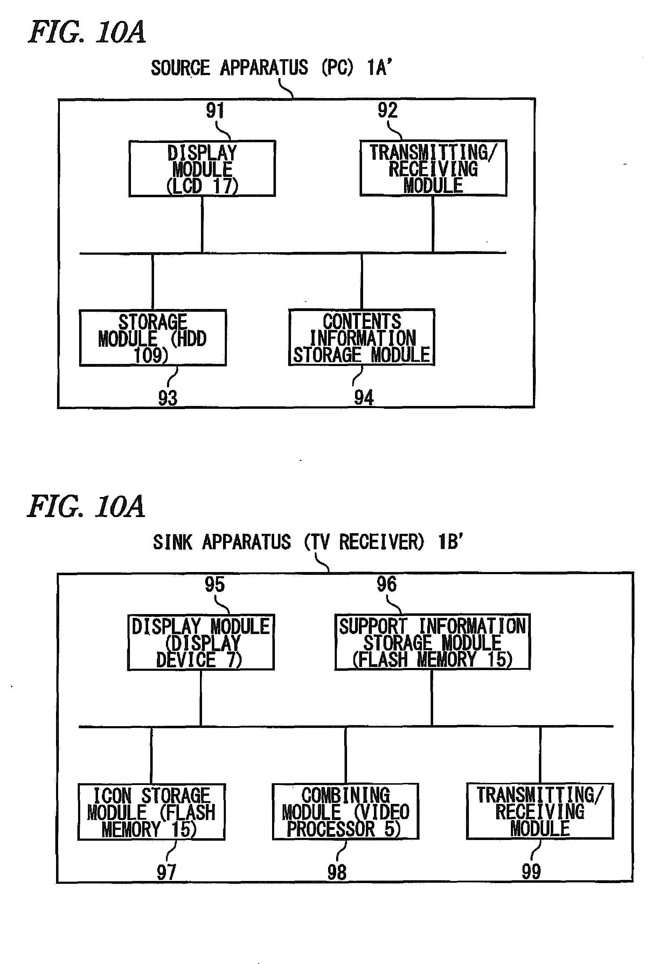

Figs. 10A and 10B show example functional configurations of a source apparatus (PC) 1A' and a sink apparatus (TV receiver) 1B' according to a second embodiment, respectively.

For example, as shown in Fig. 10A, the source apparatus 1A' is equipped with a display module 91 (LCD 17), a transmitting/receiving module 92, a storage module 93 (HDD 109), and a contents information storage module 94.

As shown in Fig. 10B, the sink apparatus 1B' is equipped with a display module 95 (display device 7), a support information storage module 96 (flash memory 15), an icon storage module 97 (flash memory 15) for storing a semitransparent icon, a combining module 98 (video processor 5), and a transmitting/receiving module 99.

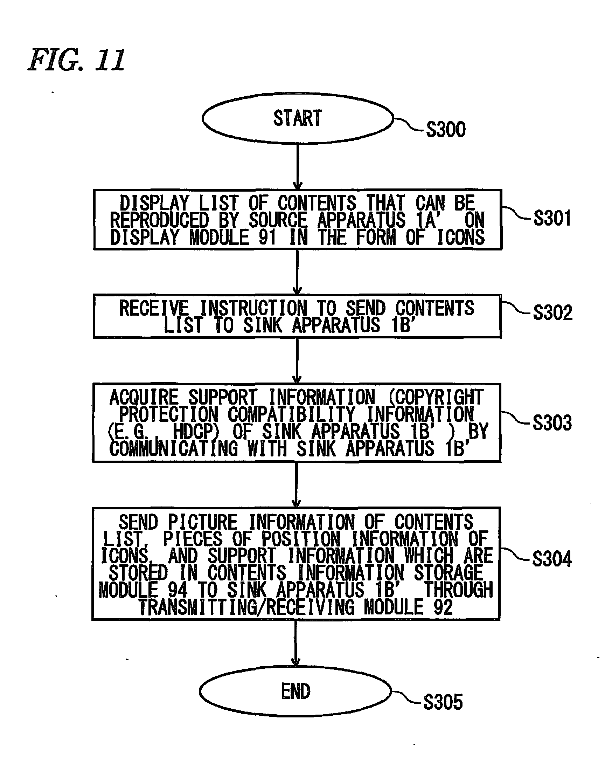

Fig. 11 shows a process executed by the source apparatus 1A' according to the second embodiment. The process starts at step S300.

At step S301, a list of contents that can be reproduced by the source apparatus 1A' are displayed in the form of icons on the display module 91 of the source apparatus 1A'.

At step S302, the source apparatus 1A' receives an instruction to send the contents list to the sink apparatus 1B'.

At step S303, the source apparatus 1A' acquires support information (copyright protection compatibility information (e.g., HDCP) of the sink apparatus 1B') by communicating with the sink apparatus 1B'.

At step S304, the source apparatus 1A' sends picture information of the contents list, pieces of position information of the respective icons, and the support information which are stored in the content information storage module 94 to the sink apparatus 1B' through the transmitting/receiving module 92. The process is finished at step S305.

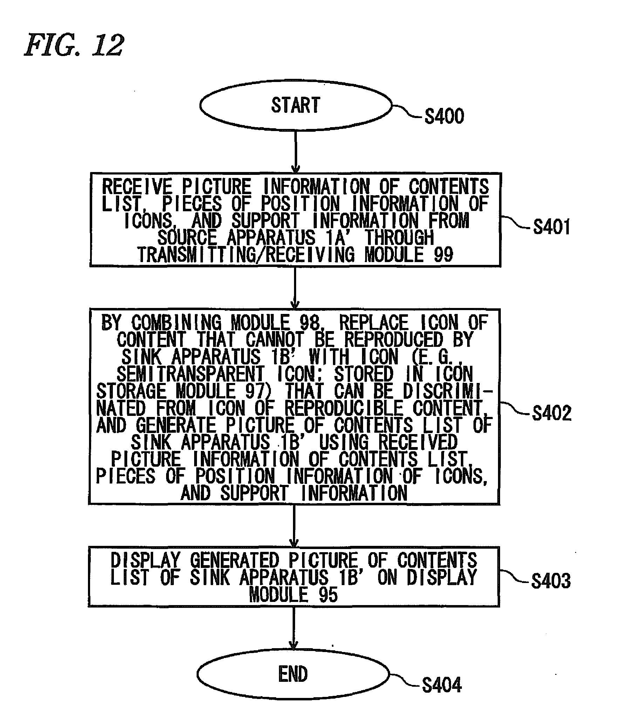

Fig. 12 shows a process executed by the sink apparatus 1B' according to the second embodiment. The process starts at step S400.

At step S401, the sink apparatus 1B' receives, from the source apparatus 1A', picture information of a contents list, pieces of position information of respective icons, and support information that are transmitted from the source apparatus 1A' through the transmitting/receiving module 99.

At step S402, the combining module 98 replaces the icon of a content that cannot be reproduced by the sink apparatus 1B' with an icon (e.g., semitransparent icon; stored in the icon storage module 97) that can be discriminated from an icon(s) of a reproducible content(s) and generates a picture of a contents list of the sink apparatus 1B' using the received picture information of the contents list, pieces of position information of the icons, and support information. -

At step S403, the generated picture of the contents list of the sink apparatus 1B' is displayed on the display module 95. The process is finished at step S404.

With the above configuration, in the case of the contents shown in Fig. 1, the content (content A) that can be reproduced by the sink apparatus 1B' is displayed on the display screen 8 of the sink apparatus 1B' using a solid line to indicate that it can be reproduced by the sink apparatus 1B'. On the other hand, the content (content B) that cannot be reproduced by the sink apparatus 1B' is displayed using an icon (e.g., semitransparent icon) that enables discrimination of that content from the reproducible content, to indicate that it cannot be reproduced by the sink apparatus 1B'. This makes it possible to inform a user on the sink side whether or not each content can be reproduced on the sink side while indicating presence of each content to the user.

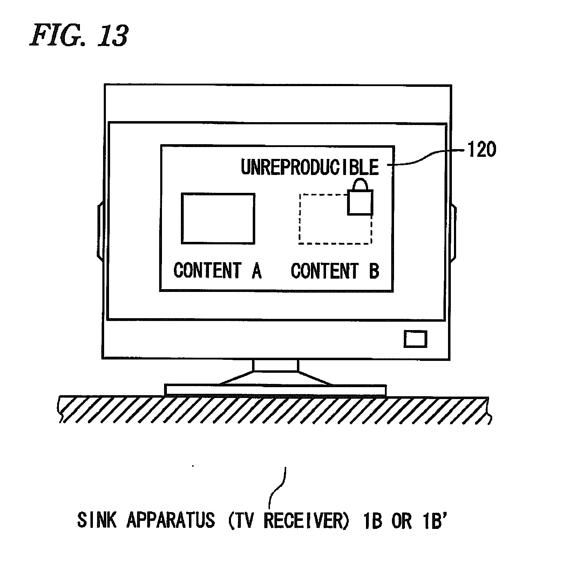

Fig. 13 shows another example picture of a contents list of the sink apparatus 1B or 1B' which is displayed by the sink apparatus 1B or 1B' according to each embodiment.

In the example of Fig. 13, for the content (content B) that cannot be reproduced by the sink apparatus 1B or 1B', not only an icon (semitransparent icon) that enables discrimination of that content from the reproducible content (content A) but also the word "Unreproducible" is displayed.

This makes it possible to more effectively inform a user on the sink side whether or not each content can be reproduced on the sink side while indicating presence of each content to the user.

The invention is not limited to the above embodiments and, these embodiments can be variously changed without departing from the spirit and scope of the invention. For example, several ones of the constituent elements of each embodiment may be omitted, and constituent elements of the different embodiments may be combined.

## Claims

1. A source apparatus comprising:
a display configured to display a list of reproducible contents;
a detector configured to obtain, upon receipt of an instruction to send contents list information to a sink apparatus, copyright protection compatibility information from the sink apparatus and detect a content that cannot be reproduced by the sink apparatus based on the obtained copyright protection compatibility information; and
an information output configured to output information of a visual indicator that enables discrimination of the detected content that cannot be reproduced by the sink apparatus from reproducible content.

2. A sink apparatus configured to receive the information that is output from the source apparatus of Claim 1, and display a second list comprising the visual indicator.

3. The sink apparatus of Claim 2, wherein the sink apparatus is configured to receive picture information relating to the list of the reproducible contents from the source apparatus, and display the second list based on the received picture information.

4. The sink apparatus of Claim 2, wherein the sink apparatus is configured to receive display position information relating to the list of the reproducible contents from the source apparatus, and display the second list based on the received display position information.

5. A source apparatus comprising:
a display configured to display a list of reproducible contents; and
a copyright protection compatibility information output configured to output, upon receipt of an instruction to send contents list information to a sink apparatus, copyright protection compatibility information of the sink apparatus obtained therefrom, picture information relating to a contents list, and display position information indicating visual indicator display positions in the contents list.

6. A sink apparatus configured to receive the copyright protection compatibility information, the picture information, and the display position information output from the source apparatus of Claim 5, and display a third list comprising a visual indicator, stored in advance, that enables discrimination of a content that cannot be reproduced by the sink apparatus from a reproducible content.

7. A control method of a source apparatus, comprising:
displaying a list of reproducible contents;
obtaining copyright protection compatibility information from the sink apparatus upon receipt of an instruction to send contents list information to a sink apparatus;
detecting a content that cannot be reproduced by the sink apparatus based on the copyright protection compatibility information; and
outputting information of a visual indicator that enables discrimination of the detected content that cannot be reproduced by the sink apparatus from a reproducible content.

8. A control method of a sink apparatus, comprising:
receiving the visual indicator information that is output from the source apparatus of Claim 1; and
displaying a second list comprising the visual indicator.
